# EUROPÄISCHE PATENTSCHRIFT

(11) **EP 3 529 979 B1**
(45) Veröffentlichungstag und Bekanntmachung des Hinweises auf die Patenterteilung: **21.08.2024**
(21) Anmeldenummer: 18725391.9
(22) Anmeldetag: 06.04.2018
(51) Int. Cl.: H04N 23/695, H04N 23/698, B60R 1/00, H04N 7/18

(54) **SPIEGEL-MONITORSYSTEM UND VERFAHREN ZUM PRÜFEN EINER WIEDERGABE EINER VIDEOSEQUENZ EINER SPIEGELERSATZKAMERA**
MIRROR MONITORING SYSTEM AND METHOD FOR CHECKING THE PLAYBACK OF A VIDEO SEQUENCE OF A MIRROR SUBSTITUTE CAMERA
SYSTÈME DE SURVEILLANCE DES MIROIRS ET PROCÉDÉ POUR LA VÉRIFICATION D'UNE REPRODUCTION D'UNE SÉQUENCE VIDÉO D'UNE CAMERA DE REMPLACEMENT DE RÉTROVISEUR

(30) Priorität: 09.05.2017 DE 102017207792
(43) Veröffentlichungstag der Anmeldung: 28.08.2019
(73) Patentinhaber: Continental Autonomous Mobility Germany GmbH, 85057 Ingolstadt (DE)
(72) Erfinder: ZINNER, Helge, 93049 Regensburg (DE)
(74) Vertreter: Continental Corporation
(86) Internationale Anmeldenummer: PCT/DE2018/200034
(87) Internationale Veröffentlichungsnummer: WO 2018/206059

(56) Entgegenhaltungen:
- WO-A1-2015/062602
- DE-A1- 102014 106 035
- DE-T2- 60 025 864
- US-A1- 2006 093 998

## Beschreibung

### Technisches Gebiet

Die vorliegende Erfindung betrifft Systeme für den Außen- und Innenspiegelersatz.

Insbesondere betrifft die vorliegende Erfindung ein Spiegel-Monitorsystem und ein Verfahren zum Prüfen einer Wiedergabe einer Videosequenz einer Spiegelersatzkamera für ein Kraftfahrzeug.

### Technischer Hintergrund

Außen- und Innenspiegel werden zunehmend durch Kamera-Monitor-System ersetzbar. Solche Spiegelersatz-Systeme umfassen eine Kamera und einen Monitor und ersetzen beispielsweise Außen- und Innenspiegel für Kraftfahrzeuge.

Neben Vorteilen bei der Aerodynamik und dem damit reduzierten Verbrauch gibt es auch technische Verbesserungen, die erst durch den Kameraeinsatz möglich sind.

So lassen sich Bilder mehrerer Kameras zu einer Rundumsicht-Anlage fusionieren bzw. zusammen montieren, störende Verzerrungen oder Bildeinflüsse herausrechnen und ein Blenden des Autofahrers vermeiden.

Der Ersatz der üblichen Spiegel und damit einem nahezu 100% funktionierenden System, müssen erweitere Funktionen für Kamera und Darstellung entwickelt werden, um das System ausfallsicher zu gestalten. Bekannte Probleme, die den herkömmlichen Spiegel nicht betreffen, aber um so mehr das Spiegelersatz-System sind unter anderem das Einfrieren von Bildern bei der Darstellung aufgrund von Fehlern im Bildverarbeitungssystem.

Beim Befahren einer Straße sollte der Fahrer zwar recht schnell erkennen, ob ein solcher Fehler vorliegt, doch bei sich nur langsam oder gar nicht veränderlichen Hintergrund, wie bei einem aus- oder einparkenden Auto, kann ein stehendes Bild vielleicht auch ein Fehler des Spiegelersatz-Systems sein.

Der Fahrer blickt beispielsweise auf den Spiegelmonitor und sieht, dass keine Gefahr besteht und fährt aus der Lücke. Allerdings kann es sich in diesem Moment um ein stehendes Bild gehandelt haben.

Die DE 10 2014 106 035 A1 beschreibt ein Verfahren zum Betreiben eines Fahrerassistenzsystems, wobei eine erste Bildsequenz eines ersten, hinteren Umgebungsbereichs eines Kraftfahrzeugs mittels eines ersten Kamerasystems eines elektronischen Rückspiegels bereitgestellt und angezeigt wird, eine zweite Bildsequenz eines zweiten Umgebungsbereichs bereitgestellt wird, die sich zumindest bereichsweise mit dem ersten Umgebungsbereich überschneidet, und wobei die zweite Bildsequenz angezeigt wird, wenn eine Fehlfunktion des elektronischen Rückspiegels vorliegt.

Die US 2006/0093998 A1 beschreibt eine Vorrichtung zur Verbesserung der Kommunikation zwischen Mensch und Maschine mit einer Benutzerschnittstelle zum Erhalten und Bereitstellen von Informationen über einen Aufmerksamkeitszustand eines Benutzers.

Druckschrift DE 600 25 864 T2 beschreibt ein multifunktionales Fahrzeugkamerasystem, welches eine Kameraeinrichtung mit mehreren an einem Fahrzeug montierten Kameras umfasst, wobei über die Kameras aufgenommene Bilder dem linken und dem rechten Türspiegel-Blickfeld entsprechen. Die Kameras sind dabei jeweils bewegbar ausgeführt, wobei über die Kameras aufgenommene Bilddaten mithilfe einer Bildverarbeitungseinrichtung bearbeitet und einem Fahrer des Fahrzeugs über Monitore dargestellt werden.

### Zusammenfassung der Erfindung

Die Erfindung wird durch die unabhängigen Ansprüche definiert. Die abhängigen Ansprüche definieren vorteilhafte Ausführungsformen.

Es ist eine Aufgabe der vorliegenden Erfindung, eine verbesserte Kamerafunktion für ein Fahrerassistenzsystem breitzustellen.

Diese Aufgabe wird durch die Gegenstände der unabhängigen Patentansprüche gelöst. Weiterbildungen und Ausführungsformen sind den abhängigen

Patentansprüchen, der Beschreibung und den Figuren der Zeichnungen zu entnehmen.

Ein erster Aspekt der vorliegenden Erfindung betrifft ein Spiegel-Monitorsystem mit einer Vorrichtung zum Prüfen einer Wiedergabe einer Videosequenz einer Spiegelersatzkamera für ein Kraftfahrzeug.

Die Vorrichtung umfasst eine bewegliche Kameraeinrichtung, welche dazu ausgebildet ist, ein Abbild aufzunehmen und Bilddaten bereitzustellen, und welche weiter dazu ausgebildet ist, eine Bewegung des Sichtfelds der Kamera vorzunehmen, um das aufgenommene Abbild zu ändern; ferner eine Bilddatenverarbeitungseinrichtung, welche mit der Kameraeinrichtung gekoppelt ist und welche dazu ausgebildet ist, basierend auf den erfassten Bilddaten die Videosequenz zu erzeugen; ferner eine Ausgabeeinrichtung, welche dazu ausgebildet ist, die erzeugte Videosequenz anzuzeigen; und ferner eine Diagnoseeinrichtung, welche dazu ausgebildet ist, die Kameraeinrichtung anzusteuern und zu bewegen, um die angezeigte Videosequenz durch einen Bildvergleich zu überprüfen und ein Einfrieren der Videosequenz zu erkennen. Die vorliegende Erfindung schlägt ein technisches System und ein Verfahren vor, um das Einfrieren von Videobildern in Kamera-Monitor-Systemen für ein Kraftfahrzeug zu erkennen.

Dabei schlägt die vorliegende Erfindung beispielsweise einen automatischen und selbständig wiederholenden Test vor.

Die vorliegende Erfindung schlägt beispielsweise vor, mittels Kamerabewegungen und durch einen Bildvergleich stehende bzw. eingefrorene Bilder des Spiegelersatz-Systems zu identifizieren.

Zusätzlich stellt das Verfahren eine Möglichkeit dar, den Fahrer auf Gefahren hinzuweisen.

Die vorliegende Erfindung ist für Spiegelersatz-Systeme vorgesehen, bei dem gerade auch die Steigerung der funktionalen Sicherheit erforderlich ist.

Die vorgeschlagenen Verfahren und Methoden ermöglichen es, die Ausfallwahrscheinlichkeit des Spiegelersatzsystems zu verringern.

Beim Auftreten von Fehler durch das Einfrieren von Bildern kann sich das System nun zum einen selbst heilen bzw. einen Fehler diagnostizieren und zum anderen kann dem Fahrer Vertrauen in die Technik und das neue System gegeben werden.

Dies führt zu einer Verbesserung der Akzeptanz der digitalen Systeme für Spiegelersatz-Anwendungen.

Die vorliegende Erfindung trägt dazu bei, die Sicherheit der bildgebenden Kamerasysteme zu erhöhen, denen eine immer größer werdende Bedeutung im Automobil bevorsteht. Die vorliegende Erfindung ist übertragbar auf andere bildgebende Systeme im Fahrzeug, etwa beispielsweise Radar oder Ultraschallbasierende Bild-gebende Sensorsysteme.

Die vorliegende Erfindung bietet Lösungen, um die Sicherheit von Kameras oder Spiegelersatz-Systemen zu erhöhen. Die vorliegende Erfindung kann ferner Unfälle, verursacht durch technische Systeme, vermeiden, dem Fahrer oder Insassen anzeigen, dass (k)ein Fehler vorliegt, und Vertrauen für sichere Systeme schaffen.

Vorteilhafte Ausgestaltungen der vorliegenden Erfindung sind den Unteransprüchen zu entnehmen.

Erfindungsgemäß ist vorgesehen, dass die Diagnoseeinrichtung dazu ausgebildet ist, das Überprüfen der angezeigten Videosequenz vorzunehmen, falls ein Blickkontakt eines Insassen mit der Ausgabeeinrichtung erfasst wurde.

In einer vorteilhaften Ausführungsform der vorliegenden Erfindung ist vorgesehen, dass die Diagnoseeinrichtung dazu ausgebildet ist, das Überprüfen der angezeigten Videosequenz vorzunehmen, falls ein vorbestimmtes Auslöseereignis festgestellt wurde. Als Auslöseereignis kann eine Fahrsituation, ein Fahrzustand, eine Handlung des Fahrers oder eine periodisch vorzunehmende Systemüberprüfung vorgesehen sein.

In einer vorteilhaften Ausführungsform der vorliegenden Erfindung ist vorgesehen, dass die Diagnoseeinrichtung dazu ausgebildet ist, das Überprüfen der angezeigten Videosequenz innerhalb von vorbestimmten Zeitspannen wiederholt vorzunehmen.

In einer vorteilhaften Ausführungsform der vorliegenden Erfindung ist vorgesehen, dass die Diagnoseeinrichtung dazu ausgebildet ist, das Überprüfen der angezeigten Videosequenz basierend auf vorherrschenden Fahrsituationen und/oder Fahrzeugzuständen vorzunehmen.

Es ist vorgesehen, dass die bewegliche Kameraeinrichtung dazu ausgebildet ist, eine Bewegung des Sichtfeldes der Kamera vorzunehmen, um das aufgenommene Abbild zu ändern. Mit anderen Worten, ein Schwenken der Kameraeinrichtung wird durchgeführt, etwa eine Bewegung um einen vorbestimmten Winkelbereich.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

### Es zeigen:

- Fig. 1:: eine schematische Darstellung des Gesamtsystems mit Kamera, abgekürzt auch MRS, für englisch "Mirror Replacement System" zur Erläuterung der vorliegenden Erfindung;
- Fig. 2:: eine schematische Darstellung einer Spiegelersatz-Kamera zur Erläuterung der vorliegenden Erfindung;
- Fig. 3:: eine schematische Darstellung eines Zeitstrahls zur Verdeutlichung der zeitlichen Abfolge zweier zeitlich hintereinander aufgenommener Bilder gemäß einem Ausführungsbeispiel der vorliegenden Erfindung;
- Fig. 4:: eine schematische Darstellung einer beispielhaften Veränderung des Kameraobjektives mit einem anderen Sichtbereich gemäß einem weiteren Ausführungsbeispiel der vorliegenden Erfindung;
- Fig. 5:: eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung;
- Fig. 6:: eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung;
- Fig. 7:: eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung;
- Fig. 8:: eine schematische Darstellung einer Möglichkeit einer Montage der Spiegelersatz-Kamera gemäß einem weiteren Ausführungsbeispiel der vorliegenden Erfindung;
- Fig. 9:: eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung;
- Fig. 10:: eine schematische Darstellung einer Vorrichtung zum Prüfen einer Wiedergabe einer Videosequenz einer Spiegelersatz-Kamera gemäß einem weiteren Ausführungsbeispiel der vorliegenden Erfindung; und
- Fig. 11:: eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Bei dem Kraftfahrzeug bzw. Fahrzeug handelt es sich beispielsweise um ein Kraftfahrzeug oder um ein Hybridfahrzeug, beispielsweise ein Hybridfahrzeug mit Segelfunktion, beispielsweise ein Motorrad, ein Bus oder ein Lastkraftwagen oder ein Fahrrad.

Vorrichtung zum Prüfen einer Wiedergabe einer Videosequenz einer Spiegelersatz-Kamera kann für weitere Kamera- und Sensorbasierten Systeme verwenden.

Prinzipiell lässt sich das Verfahren auch für einen Radar- oder Lidarsensor übertragen und die Vorrichtung zum Prüfen einer Wiedergabe einer Videosequenz hierbei einsetzen.

Der Sensor muss als solches nicht beweglich gemacht werden, denn es kann auch vorgesehen sein, dass ein Teil des Fahrzeuges - Tür, elektrische Scheibe, Rücklicht, Blinkerlicht - als bewegliches Objekt genutzt wird, je nach Umfang des aufgenommenen Abbildes.

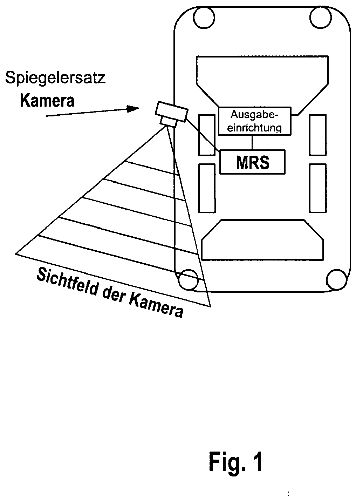

Die Fig. 1 zeigt eine schematische Darstellung einer Beschreibung des Gesamtsystems mit Kamera, ein Spiegel-Ersatzsystem, abgekürzt auch MRS, für englisch "Mirror Replacement System" zur Erläuterung der vorliegenden Erfindung.

Die Fig. 1 zeigt eine Kamera oder auch eine Kameraeinrichtung, welche in einem Fahrzeug montiert ist und welche einen bestimmten Sichtbereich bzw. ein Sichtfeld aufweist.

Ferner sind eine Bilddatenverarbeitungseinrichtung, MRS, und ein Display in Form einer Ausgabeneinrichtung zur Anzeige der Bilddaten bzw. der Videosequenz dargestellt.

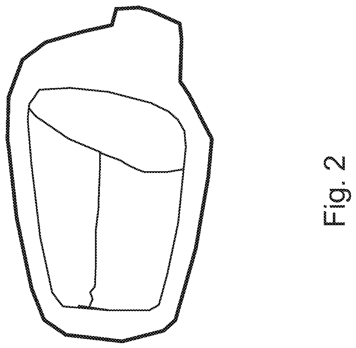

Die Fig. 2 zeigt eine schematische Darstellung einer Spiegelersatz-Kamera zur Erläuterung der vorliegenden Erfindung.

Die Fig. 2 zeigt eine beispielhafte Sicht einer Spiegelkamera.

Dabei ist meist auch ein Teil oder ein Teilbereich des Fahrzeuges sichtbar - bzw. sollte ein derartiges Umfeld sichtbar sein, damit der Fahrer sich besser orientieren kann, worauf die Kamera gerichtet ist.

Das dargestellte Verfahren beschreibt ein System:
i) welches verschiedene Vollbilder aufnimmt und über die Zeit miteinander vergleicht; und
ii) welches die Kamera automatisch ausrichtet oder bewegt und welches die Bilder der miteinander vergleicht

Die vorliegende Erfindung schlägt einen Mechanismus vor, der vorsieht, dass die Kamera, während des Betriebes und der Anzeige auf dem Bildschirm, bewegt wird, um die Anzeige und das gesamte System zu überprüfen. Ferner können auch mehrere Kameras entsprechend angesteuert und Prüf-Bewegungen mit diesen Kameras ausgeführt werden.

Dabei werden die Kamera bzw. das Objektiv beispielsweise nach links, oder rechts bewegt, um eine andere Szene aufzunehmen. So gelangen neue Objekte in den Focus der Kamera, auch bei einer stehenden Szenerie, also keiner Bewegung vom Fahrzeug oder sonstiger Objekte in der aufgenommenen Szenerie.

Es wird also ein Bild aufgenommen, welches unterschiedlich zum vorherigen Bild ist, welches vor der Bewegung aufgenommen wurde.

Beispielsweise kann die Kamera in Richtung der Fahrzeugkarosserie ausgerichtet werden, da hier auch immer ein Hintergrund zu erwarten ist.

Dieser kann auch vorgespeichert sein und lässt sich auf Basis des Winkels der Kamera auch eineindeutig bestimmten - extrem starker Nebel und Regen einmal ausgenommen.

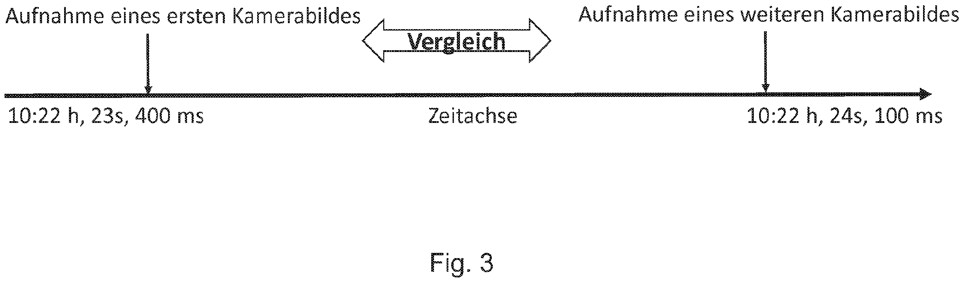

Die Fig. 3 zeigt eine schematische Darstellung eines Zeitstrahls zur Verdeutlichung der zeitlichen Abfolge zweier zeitlich hintereinander aufgenommener Abbilder gemäß einem Ausführungsbeispiel der vorliegenden Erfindung.

Die Fig. 3 zeigt einen Vergleich zweier aufeinander folgender Bilder. Dies kann auch ein Verfahren sein, um ein Einfrieren des Bildverarbeitungssystems bzw. einen Bildverlust des Bildverarbeitungssystems zu erkennen.

Dabei sollen zeitlich durch das Kamerasystem aufeinanderfolgende Bilder gespeichert werden und diese aufeinanderfolgend aufgenommenen Bilder werden nachfolgend im Rechnersystem miteinander verglichen werden unter Verwendung von softwarebasierten Bildverarbeitungsmethoden.

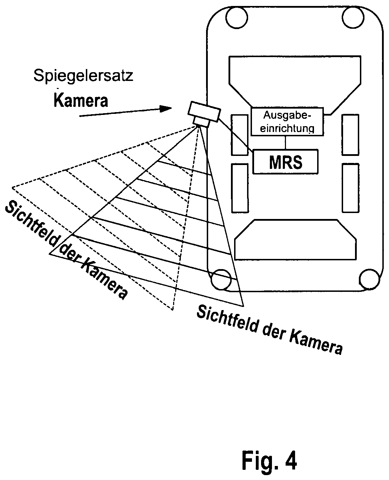

Die Fig. 4 zeigt eine schematische Darstellung einer beispielhaften Veränderung des Kameraobjektives mit einem anderen Sichtbereich gemäß einem weiteren Ausführungsbeispiel der vorliegenden Erfindung.

Die Fig. 4 zeigt exemplarisch an, dass bei der Bewegung der Kamera ein anderes - vom Sichtfeld des ersten Abbildes abweichendes - Sichtfeld entsteht.

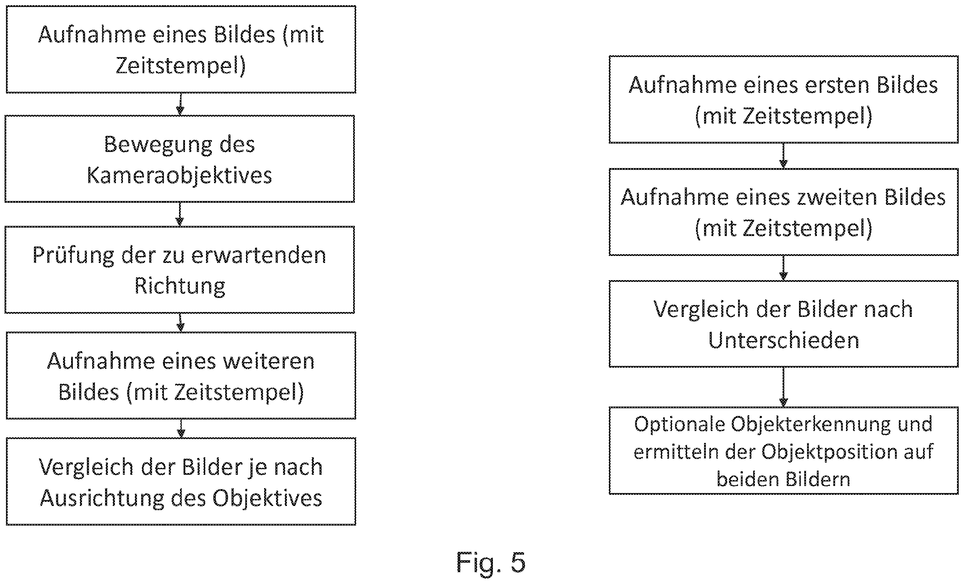

Die Fig. 5 zeigt eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung.

Die Fig. 5 zeigt eine mögliche Schwierigkeit beim einfachen Bildvergleich von aufgenommen Abbildern über die Zeit.

Wenn beispielsweise eine Parklücke oder ein Parkplatz verlassen werden soll, kann es vorkommen, dass zum Zeitpunkt der Aufnahme im Sichtfeld der Kamera wenig oder gar keine sich bewegenden Objekte zu erkennen sind.

Die Kamera nimmt wie in der Abbildung gezeigt zeitlich aufeinanderfolgende Bilder auf und vergleicht diese aufgenommenen Abbilder.

In diesem Fall findet die Kamera keinen Unterschied - es kann sich um ein Einfrieren des Kamera-Monitor-Systems handeln aber auch nicht, d.h. es kann keine Bewegung der dargestellten Objekte vorliegen.

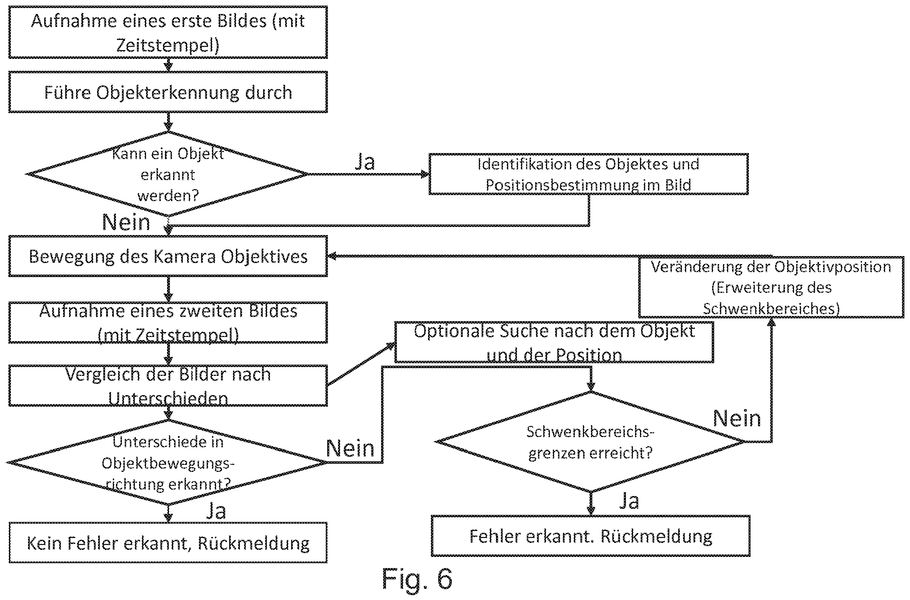

Die Fig. 6 zeigt eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung.

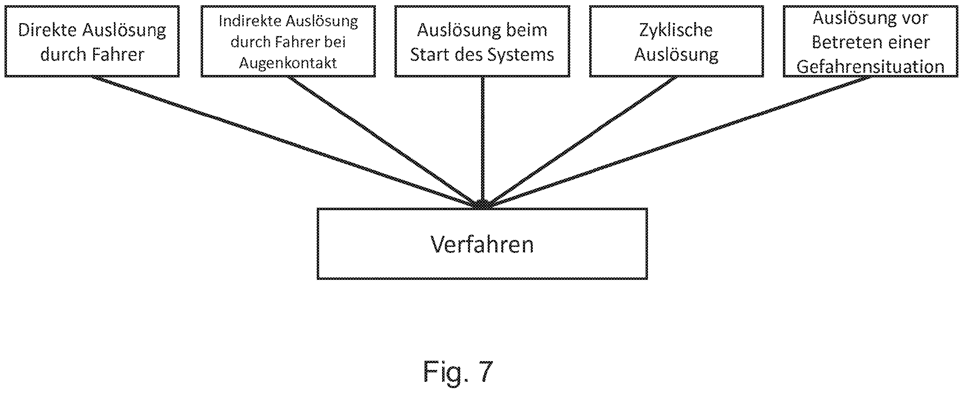

Die Fig. 7 zeigt mögliche Auslöseereignisse, auch "Trigger" genannt, zum Auslösen des Verfahrens zum Prüfen einer Wiedergabe einer Videosequenz einer Spiegelersatz-Kamera gemäß einem weiteren Ausführungsbeispiel der vorliegenden Erfindung.

Die Fig. 7 zeigt eine Ausführungsform der vorliegenden Erfindung, bei welcher Aufnahmen oder Abbilder von bestimmten Teilen oder Teilbereichen der Fahrzeugseite genutzt werden sollen, um die Erkennung von Bewegungen schneller und sicher zu erkennen.

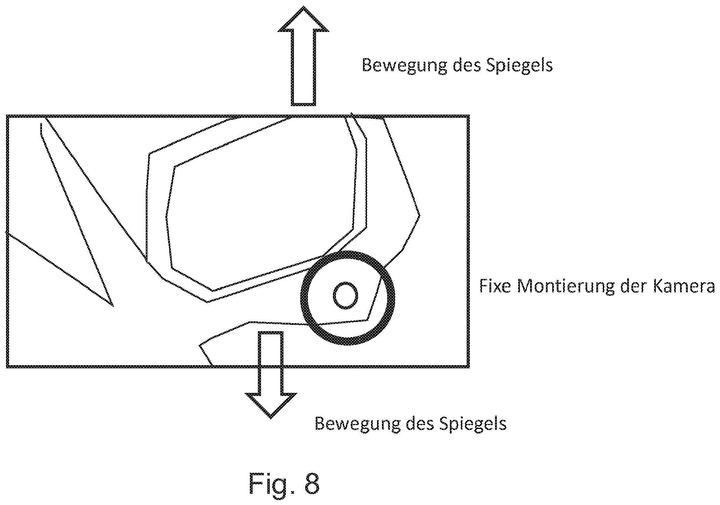

Die Fig. 8 zeigt eine weitere Möglichkeit, falls die Kamera fix in einer Halterung, hier Spiegel, montiert wird.

Nach einem Ausführungsbeispiel der vorliegenden Erfindung kann dabei vorgesehen sein, über die Spiegelverstellung die Kamera zu bewegen respektive das Einfrieren des Bildverarbeitungs- und Bildanzeigeprozesses im Spiegelersatz-System zu erkennen.

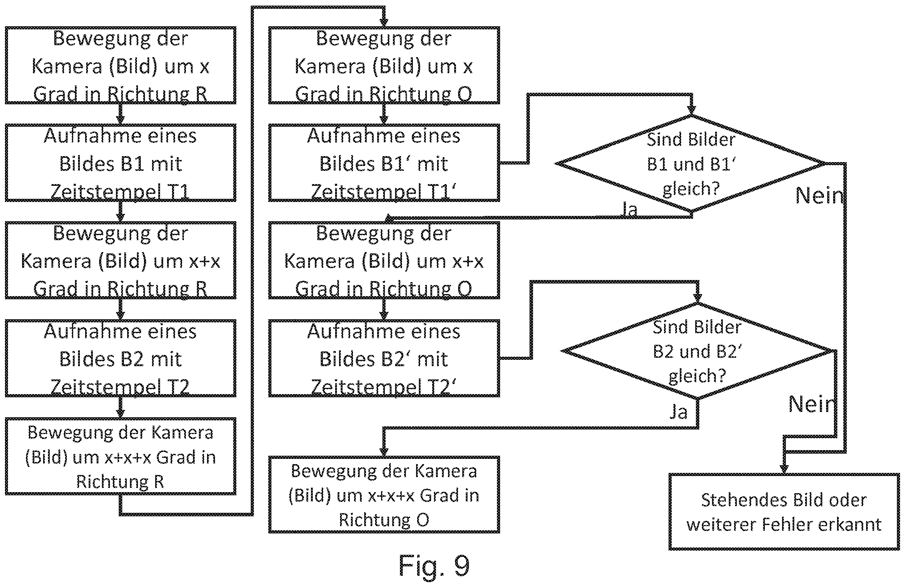

Die Fig. 9 zeigt eine schematische Darstellung eines Flussdiagramms eines Verfahrens zum Prüfen einer Wiedergabe einer Videosequenz einer Spiegelersatz-Kamera gemäß einem weiteren Ausführungsbeispiel der vorliegenden Erfindung.

Die Fig. 9 zeigt ein Ablaufdiagramm zur Erkennung eines Fehlers im Bild durch Anpassung der Kamera.

Die Fig. 9 zeigt das Resultat des Verfahrens. Da die Kamera meist, mit großer Wahrscheinlichkeit, das eigene Fahrzeug oder zumindest Teile des eigenen Fahrzeuges aufnimmt, kann hier euch eindeutig ein Unterschied erkannt werden, etwa für den Fall, dass ein Blinkerlicht betätigt wurde. Optional könnten am Fahrzeug auch Markierungspunkte angebracht werden.

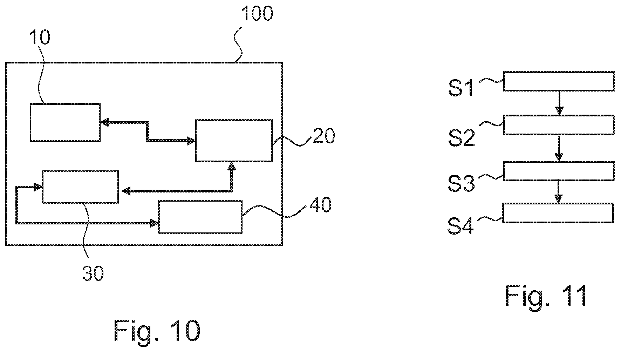

Die Fig. 10 zeigt eine schematische Darstellung zum Prüfen einer Wiedergabe einer Videosequenz einer Spiegelersatzkamera für ein Kraftfahrzeug gemäß einem weiteren Ausführungsbeispiel der vorliegenden Erfindung.

Die Vorrichtung 100 zum Prüfen einer Wiedergabe einer Videosequenz einer Spiegelersatzkamera für ein Kraftfahrzeug umfasst eine Kameraeinrichtung 10, eine Bilddatenverarbeitungseinrichtung 20, eine Ausgabeeinrichtung 30, und eine Diagnoseeinrichtung 40.

Die bewegliche Kameraeinrichtung 10 ist dazu ausgebildet, ein Abbild aufzunehmen und Bilddaten bereitzustellen.

Die Bilddatenverarbeitungseinrichtung 20 ist mit der Kameraeinrichtung 10 gekoppelt und dazu ausgebildet, basierend auf den erfassten Bilddaten die Videosequenz zu erzeugen.

Die Ausgabeeinrichtung 30 ist dazu ausgebildet, die erzeugte Videosequenz anzuzeigen.

Die Diagnoseeinrichtung 40 ist dazu ausgebildet, die Kameraeinrichtung 10 zu bewegen und/oder beim Erzeugen der Videosequenz eine Bildbewegung zu generieren, um die angezeigte Videosequenz zu überprüfen.

Die Fig. 11 zeigt eine schematische Darstellung eines Flussdiagramms eines Verfahrens zum Prüfen einer Wiedergabe einer Videosequenz einer Spiegelersatzkamera für ein Kraftfahrzeug gemäß einem weiteren Ausführungsbeispiel der vorliegenden Erfindung.

Das Verfahren zum Prüfen einer Wiedergabe einer Videosequenz einer Spiegelersatzkamera für ein Kraftfahrzeug umfasst die folgenden Verfahrensschritte:
Als ein erster Verfahrensschritt erfolgt ein Erfassen S1 eines Abbildes und ein Bereitstellen von Bilddaten mittels einer beweglichen Kameraeinrichtung 10.

Als ein zweiter Verfahrensschritt erfolgt ein Erzeugen S2 der Videosequenz basierend auf den erfassten Bilddaten.

Als ein dritter Verfahrensschritt erfolgt ein Anzeigen S3 der erzeugten Videosequenz.

Als ein vierter Verfahrensschritt erfolgt ein Bewegen S4 der Kameraeinrichtung 10 und/oder ein Generieren einer Bildbewegung beim Erzeugen der Videosequenz, um die angezeigte Videosequenz zu überprüfen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Spiegel-Monitorsystem umfassend eine Spiegelersatz-Kamera und eine Vorrichtung zum Prüfen einer Wiedergabe einer Videosequenz einer Spiegelersatzkamera für ein Kraftfahrzeug, die Vorrichtung (1) umfassend:
- eine bewegliche Kameraeinrichtung (10), welche dazu ausgebildet ist, ein Abbild aufzunehmen und Bilddaten bereitzustellen, und welche weiter dazu ausgebildet ist, eine Bewegung des Sichtfeldes der Kamera vorzunehmen, um das aufgenommene Abbild zu ändern;
- eine Bilddatenverarbeitungseinrichtung (20), welche mit der Kameraeinrichtung (10) gekoppelt ist und welche dazu ausgebildet ist, basierend auf den erfassten Bilddaten die Videosequenz zu erzeugen;
- eine Ausgabeeinrichtung (30), welche dazu ausgebildet ist, die erzeugte Videosequenz anzuzeigen; **gekennzeichnet durch**
- eine Diagnoseeinrichtung (40), welche dazu ausgebildet ist, die Kameraeinrichtung (10) anzusteuern und zu bewegen, um die angezeigte Videosequenz durch einen Bildvergleich zu überprüfen und ein Einfrieren der Videosequenz zu erkennen, wobei die Diagnoseeinrichtung (40) dazu ausgebildet ist, das Überprüfen der angezeigten Videosequenz vorzunehmen, falls ein Blickkontakt eines Insassen mit der Ausgabeeinrichtung (30) erfasst wurde.

2. Spiegel-Monitorsystem nach Anspruch 1, wobei die Diagnoseeinrichtung (40) dazu ausgebildet ist, das Überprüfen der angezeigten Videosequenz innerhalb von vorbestimmten Zeitspannen wiederholt vorzunehmen.

3. Spiegel-Monitorsystem nach einem der vorhergehenden Patentansprüche, wobei die Diagnoseeinrichtung (40) dazu ausgebildet ist, das Überprüfen der angezeigten Videosequenz basierend auf vorherrschenden Fahrsituationen und/oder basierend auf vorherrschenden Fahrzeugzuständen vorzunehmen.

4. Verfahren zum Prüfen einer Wiedergabe einer Videosequenz einer Spiegelersatzkamera für ein Kraftfahrzeug, das Verfahren umfassend die folgenden Verfahrensschritte:
- Erfassen (S1) eines Abbildes und Bereitstellen von Bilddaten mittels einer beweglichen Kameraeinrichtung (10);
- Erzeugen (S2) der Videosequenz basierend auf den erfassten Bilddaten;
- Anzeigen (S3) der erzeugten Videosequenz auf einer Ausgabeeinrichtung (30); **gekennzeichnet durch**
- Ansteuern und Bewegen (S4) der Kameraeinrichtung (10), um die angezeigte Videosequenz durch einen Bildvergleich zu überprüfen und ein Einfrieren der Videosequenz zu erkennen, wobei das Überprüfen der angezeigten Videosequenz vorgenommen wird, falls ein Blickkontakt eines Insassen mit der Ausgabeeinrichtung (30) erfasst wurde.

## Claims

1. Mirror monitoring system comprising a mirror replacement camera and an apparatus for checking playback of a video sequence from a mirror replacement camera for a motor vehicle, the apparatus (1) comprising:
- a movable camera device (10) which is designed to record an image and to provide image data and is also designed to move the field of view of the camera in order to change the recorded image;
- an image data processing device (20) which is coupled to the camera device (10) and is designed to generate the video sequence on the basis of the captured image data;
- an output device (30) which is designed to display the generated video sequence; **characterized by**
- a diagnostic device (40) which is designed to control and move the camera device (10) in order to check the displayed video sequence by means of an image comparison and to detect freezing of the video sequence, wherein the diagnostic device (40) is designed to check the displayed video sequence if visual contact of an occupant with the output device (30) was detected.

2. Mirror monitoring system according to Claim 1, wherein the diagnostic device (40) is designed to repeatedly check the displayed video sequence within predetermined periods of time.

3. Mirror monitoring system according to one of the preceding patent claims, wherein the diagnostic device (40) is designed to check the displayed video sequence on the basis of prevailing driving situations and/or on the basis of prevailing vehicle states.

4. Method for checking playback of a video sequence from a mirror replacement camera for a motor vehicle, the method comprising the following method steps of:
- capturing (S1) an image and providing image data by means of a movable camera device (10);
- generating (S2) the video sequence on the basis of the captured image data;
- displaying (S3) the generated video sequence on an output device (30); **characterized by**
- controlling and moving (S4) the camera device (10) in order to check the displayed video sequence by means of an image comparison and to detect freezing of the video sequence, wherein the displayed video sequence is checked if visual contact of an occupant with the output device (30) was detected.

## Revendications

1. Système formant moniteur de rétroviseur comprenant une caméra de remplacement de rétroviseur et un dispositif pour vérifier une lecture d'une séquence vidéo d'une caméra de remplacement de rétroviseur pour un véhicule automobile, le dispositif (1) comprenant :
- un dispositif (10) formant caméra mobile, qui est conçu pour prendre une image et fournir des données d'image, et qui est en outre conçu pour effectuer un mouvement du champ de vision de la caméra afin de modifier l'image capturée ;
- un dispositif (20) de traitement de données d'image, qui est relié au dispositif (10) formant caméra et qui est conçu pour générer la séquence vidéo sur la base des données d'image capturées ;
- un dispositif de sortie (30) qui est conçu pour afficher la séquence vidéo générée ; **caractérisé par**
- un dispositif de diagnostic (40) qui est conçu pour commander et déplacer le dispositif (10) formant caméra afin de vérifier la séquence vidéo affichée par une comparaison d'images et de détecter un gel de la séquence vidéo, le dispositif de diagnostic (40) étant conçu pour procéder à la vérification de la séquence vidéo affichée si un contact visuel d'un occupant avec le dispositif de sortie (30) a été détecté.

2. Système formant moniteur de rétroviseur selon la revendication 1, dans lequel le dispositif de diagnostic (40) est conçu pour effectuer de manière répétée la vérification de la séquence vidéo affichée à l'intérieur d'intervalles de temps prédéterminés.

3. Système formant moniteur de rétroviseur selon l'une des revendications précédentes, dans lequel le dispositif de diagnostic (40) est conçu pour effectuer la vérification de la séquence vidéo affichée sur la base de situations de conduite prédominantes et/ou sur la base d'états prédominants du véhicule.

4. Procédé de vérification d'une reproduction d'une séquence vidéo d'une caméra de remplacement de rétroviseur pour un véhicule automobile, le procédé comprenant les étapes de procédé suivantes :
- capture (S1) d'une image et fourniture de données d'image au moyen d'un dispositif (10) formant caméra mobile ;
- génération (S2) de la séquence vidéo sur la base des données d'image saisies ;
- affichage (S3) de la séquence vidéo générée sur un dispositif de sortie (30) ; **caractérisé par**
- le fait de commander et de déplacer (S4) le dispositif (10) formant caméra afin de vérifier la séquence vidéo affichée par une comparaison d'images et de détecter un gel de la séquence vidéo, la vérification de la séquence vidéo affichée étant effectuée si un contact visuel d'un occupant avec le dispositif de sortie (30) a été détecté.
